(19) Europäisches Patentamt
European Patent Office
Office européen des brevets

(11) **EP 2 765 394 B1**

(12) **EUROPÄISCHE PATENTSCHRIFT**

(45) Veröffentlichungstag und Bekanntmachung des Hinweises auf die Patenterteilung:
**23.05.2018 Patentblatt 2018/21**

(51) Int Cl.:
***G01D 5/26*** *(2006.01)*      ***G01D 5/38*** *(2006.01)*

(21) Anmeldenummer: **14152674.9**

(22) Anmeldetag: **27.01.2014**

(54) **Optische Positionsmesseinrichtung**

Optical positioning device

Dispositif optique de mesure de la position

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.02.2013 DE 102013201904**
**05.11.2013 DE 102013222383**

(43) Veröffentlichungstag der Anmeldung:
**13.08.2014 Patentblatt 2014/33**

(73) Patentinhaber: **Dr. Johannes Heidenhain GmbH 83301 Traunreut (DE)**

(72) Erfinder: **Sändig, Karsten 83349 Palling (DE)**

(56) Entgegenhaltungen:
**EP-A1- 0 539 757     EP-A1- 1 887 324**
**EP-A2- 2 392 900     DE-A1-102007 024 349**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine optische Positionsmesseinrichtung gemäß dem Oberbegriff von Anspruch 1.

Bekannte optische Positionsmesseinrichtungen umfassen eine Maßverkörperung sowie eine hierzu relativ bewegliche Abtasteinheit. In der Abtasteinheit sind in der Regel eine Lichtquelle, optoelektronische Detektorelemente sowie weitere optische Bauelemente wie Linsen, Gitter etc. angeordnet. Für bestimmte Anwendungsfälle kann eine Abtasteinheit mit all diesen Komponenten jedoch ggf. zu voluminös bauen. Ferner ist auch eine unerwünschte Beeinflussung der aktiven Komponenten einer derartigen Abtasteinheit durch elektromagnetische Störfelder oder erhöhte Temperaturen in bestimmten Applikationen möglich. Zudem kann es durch die elektrische Verlustleistung der Lichtquelle zu einer thermischen Beeinflussung der Messgenauigkeit kommen.

Es sind daher Lösungen für optische Positionsmesseinrichtungen bekannt geworden, bei denen am eigentlichen Messort nur die abgetastete Maßverkörperung sowie ein relativ hierzu beweglicher, passiver Faseroptik-Abtastkopf angeordnet werden. Die weiteren aktiven Komponenten, die für die Abtastung funktionsrelevant sind, wie Lichtquelle und optoelektronische Detektorelemente werden räumlich entfernt vom Messort angeordnet und sind über Lichtleitfasern mit dem Faseroptik-Abtastkopf verbunden. Auf diese Art und Weise kann ein äußerst kompakt bauendes System am eigentlichen Messort realisiert werden. Ferner lassen sich auch Störeinflüsse auf die verschiedenen aktiven Komponenten auf der Abtastseite minimieren.

Eine derartige Positionsmesseinrichtung ist z.B. in der DE 10 2007 024 349 A1 der Anmelderin vorgeschlagen worden. Die in dieser Druckschrift offenbarte Positionsmesseinrichtung umfasst neben einer Maßverkörperung, ausgebildet als Reflexions-Maßverkörperung, einen relativ in mindestens einer Messrichtung hierzu verschiebbaren Faseroptik-Abtastkopf. Dem Faseroptik-Abtastkopf sind räumlich entfernt weitere Komponenten der Positionsmesseinrichtung nachgeordnet, verbunden über eine geeignete Lichtleitfaser. Zu diesen Komponenten gehören etwa die zur optischen Abtastung erforderliche Lichtquelle, mehrere optoelektronische Detektorelemente sowie ggf. weitere aktive Komponenten zur Signalerzeugung und Signalweiterverarbeitung. Der rein passive Faseroptik-Abtastkopf umfasst i.w. eine Abtastplatte sowie das Ende einer Lichtleitfaser für die Beleuchtungs-Zuführung und die Rückführung der signalerzeugenden Strahlenbündel. Um mehrere phasenverschobene Abtastsignale zu erzeugen, ist eine wellenlängenabhängige Kodierung der Abtastsignale vorgesehen. Hierzu wird die Abtastplatte breitbandig beleuchtet und die Abtastplatte aus einer Vielzahl von Elementarzellen ausgebildet, die jeweils aus mehreren Bereichen bestehen, welche für verschiedene Wellenlängenbereiche des Beleuchtungsspektrums transparent sind. Hierzu sind die verschiedenen Bereiche pro Elementarzelle der Abtastplatte z.B. als Teil-Etalons mit unterschiedlichen Transmissionswellenlängen ausgebildet. Das in der DE 10 2007 024 349 A1 genutzte Abtastprinzip lässt sich nunmehr jedoch nicht in Verbindung mit sehr kleinen Teilungsperioden auf Seiten der Reflexions-Maßverkörperung nutzen. Grund hierfür ist, dass die Teil-Etalons nicht beliebig klein gemacht werden können, wobei gleichzeitig ihre wellenlängenabhängige Durchlässigkeit beibehalten wird.

Desweiteren ist eine vergleichbare optische Positionsmesseinrichtung aus der EP 1 887 324 A1 bekannt. Der passive Faseroptik-Abtastkopf dieser Positionsmesseinrichtung ist insbesondere zur interferentiellen Abtastung einer Reflexions-Maßverkörperung mit einer sehr kleinen Teilungsperiode geeignet. Drei phasenverschobene Abtastsignale werden hierbei mittels geeigneter Phasenmasken in drei separate Übertragungskanäle einer Faseroptik eingespeist.

Der vorliegenden Erfindung liegt das Problem zugrunde, eine optische Positionsmesseinrichtung mit einem passiven Faseroptik-Abtastkopf zu schaffen, über den eine hochauflösende Positionsmessung möglich ist.

Diese Aufgabe wird gelöst durch eine optische Positionsmesseinrichtung mit den Merkmalen des Anspruchs 1.

Vorteilhafte Ausführungen der erfindungsgemäßen optischen Positionsmesseinrichtungen ergeben sich aus den Maßnahmen in den abhängigen Ansprüchen.

Die erfindungsgemäße optische Positionsmesseinrichtung dient zur Erzeugung mehrerer phasenverschobener Abtastsignale bezüglich der Relativposition eines Faseroptik-Abtastkopfes und einer hierzu in mindestens einer Messrichtung beweglichen Reflexions-Maßverkörperung. Im Faseroptik-Abtastkopf ist eine Abtastplatte vor dem maßverkörperungsseitigen Ende einer Lichtleitfaser angeordnet; es erfolgt eine wellenlängenabhängige Kodierung der phasenverschobenen Abtastsignale. Die Abtastplatte ist derart ausgebildet ist, dass

- ein auf die Abtastplatte einfallendes Strahlenbündel eine Aufspaltung in mindestens zwei Teilstrahlenbündel erfährt, welche die Reflexions-Maßverkörperung beaufschlagen und anschließend zur Erzeugung der phasenverschobenen Abtastsignale wiedervereinigt miteinander interferieren und
- die Teilstrahlenbündel zwischen der Aufspaltung und der Wiedervereinigung unterschiedliche optische Weglängen zurücklegen.

In einer vorteilhaften Ausführungsform ist die Abtastplatte ferner derart ausgebildet, dass mindestens zwei Teilstrahlenbündel zwischen der Abtastplatte und der Reflexions-Maßverkörperung symmetrisch in Bezug auf eine Abtastplatten-Normale propagieren und die Reflexions Maßverkörperung unter deren Littrow-Winkel beaufschlagen.

Vorzugsweise weist die verwendete Reflexions-Maßverkörperung in +/- 1. Beugungsordnung die maximalen Beugungseffizienzen auf.

Es kann vorgesehen werden, dass die Lichtleitfaser als Multimodefaser ausgebildet ist, über die sowohl das zur Beleuchtung genutzte Strahlenbündel hin zum Faseroptik-Abtastkopf als auch die wiedervereinigten Teilstrahlenbündel weg vom Faseroptik-Abtastkopf übertragbar sind.

Ferner ist möglich, dass am maßverkörperungs-abgewandten Ende der Lichtleitfaser

- eine spektral breitbandige Lichtquelle oder
- mehrere Lichtquellen, die Strahlung unterschiedlicher Wellenlängen emittieren,

angeordnet sind, deren Strahlung als Beleuchtungsstrahlenbündel über Einkoppelmittel in die Lichtleitfaser einkoppelbar ist.

Hierbei kann am maßverkörperungs-abgewandten Ende der Lichtleitfaser eine Detektoreinrichtung angeordnet sein, die

- Aufspaltmittel zur wellenlängenabhängigen Trennung der wiedervereinigten Teilstrahlenbündel sowie
- mehrere optoelektronische Detektorelemente umfasst, denen die getrennten Teilstrahlenbündel zuführbar sind und die detektierten Teilstrahlenbündel in elektrische, phasenverschobene Abtastsignale umsetzen.

Vorteilhafterweise ist die Abtastplatte als plattenförmiges, transparentes Substrat ausgebildet, wobei

- auf der der Lichtleitfaser zugewandten Seite der Abtastplatte ein erstes Transmissions-Gitter angeordnet ist, welches das darauf einfallende Strahlenbündel in mindestens zwei gebeugte Teilstrahlenbündel aufspaltet, die asymmetrisch in Bezug auf eine Abtastplatten-Normale weiterpropagieren und
- auf der der Reflexions-Maßverkörperung zugewandten Seite der Abtastplatte ein zweites Transmissionsgitter angeordnet ist, das die vom ersten Transmissionsgitter her darauf einfallenden Teilstrahlenbündel derart ablenkt, dass diese symmetrisch zueinander in Bezug auf eine Abtastplatten-Normale zwischen der Abtastplatte und der Reflexions-Maßverkörperung propagieren und die Reflexions-Maßverkörperung unter deren Littrow-Winkel beaufschlagen.

Mit Vorteil sind das erste Transmissionsgitter und das zweite Transmissionsgitter jeweils als geblaztes Phasengitter ausgebildet.

Es kann vorgesehen sein, dass das erste Transmissionsgitter und das zweite Transmissionsgitter entlang der Messrichtung einen periodischen Phasenverlauf aufweisen.

Desweiteren ist es möglich, das erste Transmissionsgitter derart auszubilden, dass darüber eine kollimierende Wirkung auf das darauf einfallende Strahlenbündel resultiert.

Vorzugsweise sind zur Einstellung einer Mehrfachabtastung der zu den phasenverschobenen Abtastsignalen beitragenden Signalanteile die Dicke der Abtastplatte und/oder die Gitterparameter der darauf angeordneten Transmissionsgitter geeignet gewählt.

In einer weiteren Ausführungsform kann vorgesehen sein, dass ein linear polarisiertes Strahlenbündel auf die Abtastplatte einfällt, wobei

- an der der Lichtleitfaser zugewandten Seite der Abtastplatte ein erstes Transmissions-Gitter angeordnet ist, welches das darauf einfallende Strahlenbündel in mindestens zwei gebeugte Teilstrahlenbündel aufspaltet und
- an der der Reflexions-Maßverkörperung zugewandten Seite der Abtastplatte ein doppelbrechendes Element angeordnet ist, in dem die aufgespaltenen Teilstrahlenbündel asymmetrisch in Bezug auf eine Abtastplatten-Normale weiterpropagieren und nach dem Verlassen der Abtastplatte symmetrisch zueinander in Bezug auf die Abtastplatten-Normale zwischen der Abtastplatte und der Reflexions-Maßverkörperung propagieren und die Reflexions-Maßverkörperung unter dem Littrow-Winkel beaufschlagen.

Mit Vorteil ist zur Einstellung einer Mehrfachabtastung der zu den phasenverschobenen Abtastsignalen beitragenden Signalanteile die Dicke des doppelbrechenden Elements geeignet gewählt.

Ferner kann vorgesehen werden , dass die Aufspaltmittel mehrere im Strahlengang hintereinander angeordneter Beugungsgitter umfassen.

Es ist weiterhin möglich, dass am maßverkörperungs-abgewandten Ende der Lichtleitfaser eine Antireflexschicht angeordnet ist und/oder die Lichtleitfaser dort einen Schrägschliff aufweist.

Über die erfindungsgemäße optische Positionsmesseinrichtung kann nunmehr auch eine hochauflösende Positionsbestimmung mit einem passiven Faseroptik-Abtastkopf erfolgen, d.h. es können Reflexions-Maßverkörperungen mit sehr kleinen Teilungsperioden mit Hilfe des Faseroptik-Abtastkopfes abgetastet werden.

Als weiterer Vorteil ist zu erwähnen, dass aufgrund der symmetrisch verlaufenden Wege der aufgespalten Teilstrahlenbündel zwischen dem Faseroptik-Abtastkopf und der Reflexions-Maßverkörperung eine hohe Unempfindlichkeit des Systems gegenüber Schwankungen des Abtastabstands resultiert; insbesondere ist die angezeigte Position unabhängig vom Abtastabstand.

Der passive Faseroptik-Abtastkopf der erfindungsgemäßen optischen Positionsmesseinrichtung weist zudem einen besonders einfachen Aufbau auf und baut sehr kompakt.

Weitere Einzelheiten und Vorteile der vorliegenden Erfindung seien anhand der nachfolgenden Beschreibung von Ausführungsbeispielen der erfindungsgemäßen Positionsmesseinrichtung in Verbindung mit den Figuren erläutert.

Es zeigt

Figur 1          eine schematisierte Darstellung eines ersten Ausführungsbeispiels der erfindungsgemäßen Positionsmesseinrichtung;

Figur 2a, 2b     jeweils in schematisierter Form den Phasenverlauf des ersten und zweiten Transmissionsgitters auf der Ober- und Unterseite der Abtastplatte des ersten Ausführungsbeispiels;

Figur 3          eine schematisierte Teil-Darstellung eines zweiten Ausführungsbeispiels der erfindungsgemäßen Positionsmesseinrichtung;

Figur 4          in schematisierter Form den Phasenverlauf des ersten Transmissionsgitters auf der Oberseite der Abtastplatte des zweiten Ausführungsbeispiels;

Figur 5          eine schematisierte Teil-Darstellung eines dritten Ausführungsbeispiels der erfindungsgemäßen Positionsmesseinrichtung;

Figur 6          in schematisierter Form den Phasenverlauf des ersten Transmissionsgitters auf der Oberseite der Abtastplatte des dritten Ausführungsbeispiels;

Figur 7          eine schematisierte Teil-Darstellung eines vierten Ausführungsbeispiels der erfindungsgemäßen Positionsmesseinrichtung;

Figur 8          in schematisierter Form den Phasenverlauf des ersten Transmissionsgitters auf der Oberseite der Abtastplatte des vierten Ausführungsbeispiels.

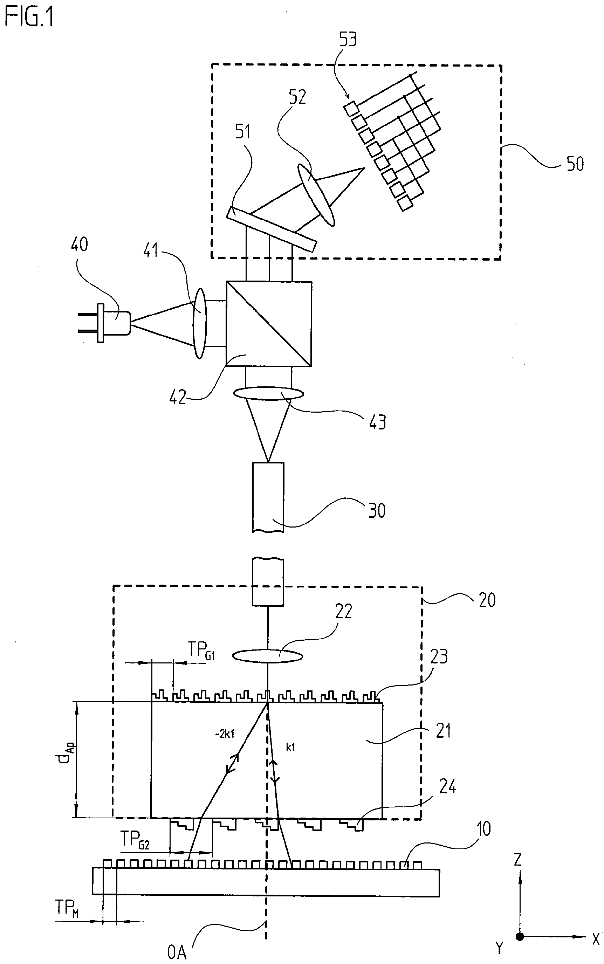

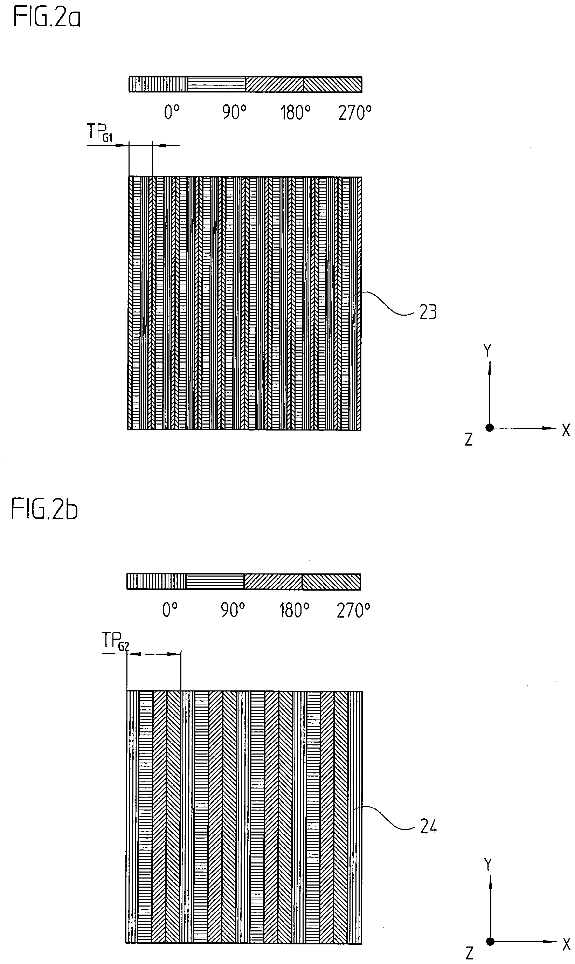

Anhand der Figuren 1, 2a und 2b sei nachfolgend ein erstes Ausführungsbeispiel der erfindungsgemäßen Positionsmesseinrichtung erläutert.

Die optische Positionsmesseinrichtung des dargestellten Ausführungsbeispiels umfasst eine lineare Reflexions-Maßverkörperung 10, die mindestens in der angegebenen Messrichtung x relativ beweglich zu einem Faseroptik-Abtastkopf 20 angeordnet ist. Hierbei kann entweder die Reflexions-Maßverkörperung 10 stationär und der Faseroptik-Abtastkopf 20 beweglich oder die Reflexions- Maßverkörperung 10 beweglich und der Faseroptik-Abtastkopf 20 stationär angeordnet sein. Die Reflexions-Maßverkörperung 10 und der Faseroptik-Abtastkopf 20 sind mit zwei - nicht dargestellten - Objekten verbunden, die relativ zueinander in Messrichtung x beweglich sind und deren Relativposition zueinander zu bestimmen ist. Hierbei kann es sich etwa um zwei zueinander bewegliche Komponenten einer Maschine handeln, deren Relativposition erfasst werden muss. Über eine nachgeordnete, ebenfalls nicht dargestellte, Folgeelektronik, der die von der Positionsmesseinrichtung erzeugten positionsabhängigen Abtastsignale zugeführt werden, kann dann eine entsprechende Lage- oder Positionsregelung bzgl. dieser Komponenten erfolgen.

Die Reflexions-Maßverkörperung 10 des dargestellten Ausführungsbeispiels ist als lineares Reflexions-Phasengitter ausgebildet, das im Auflicht vom Faseroptik-Abtastkopf 20 abgetastet wird. Die Reflexions-Maßverkörperung 10 besteht aus periodisch in Messrichtung x angeordneten Teilungsbereichen mit unterschiedlichen phasenschiebenden Wirkungen. Die Teilungsbereiche besitzen eine rechteckige Form, wobei sich die Rechtecks-Längsachse entlang der angegebenen y-Richtung erstreckt, die in der Maßverkörperungsebene senkrecht zur Messrichtung x orientiert ist.

Selbstverständlich kann alternativ zur dargestellten Ausführungsform auch eine rotatorische Reflexions-Maßverkörperung in Form einer Radial- oder Trommelteilung in der erfindungsgemäßen Positionsmesseinrichtung zum Einsatz kommen.

Die Beleuchtung der Reflexions-Maßverkörperung 10 erfolgt durch die Zuführung eines Beleuchtungsstrahlenbündels über eine Lichtleitfaser 30. Hierzu ist am maßverkörperungs-abgewandten Ende der Lichtleitfaser 30 eine spektral breitbandige Lichtquelle 40 angeordnet, deren Strahlung über Einkoppelmittel in Form einer Kollimatorlinse 41, eines Strahlteilers 42 und einer Einkoppellinse 43 in die Lichtleitfaser 30 eingekoppelt wird. Als geeignete Lichtquelle 40 mit einem hinreichend breitbandigen Emissionsspektrum kommt z.B. eine Infrarot-LED in Betracht, die bei einer Zentralwellenlänge von 850nm emittiert und eine spektrale Breite von 60nm besitzt.

Die aktive Fläche der Lichtquelle 40 wird über die gezeigte Anordnung im Verhältnis der Brennweiten der Einkoppellinse 43 und der Kollimatorlinse 41 in die Einkoppelfläche der Lichtleitfaser 30 abgebildet. Das Abbildungsverhältnis ist hierbei auf die Einkopplung der möglichst maximalen Lichtleistung in die Lichtleitfaser 30 zu optimieren.

Am maßverkörperungs-abgewandten Ende der Lichtleitfaser 30 ist neben der Lichtquelle 40 desweiteren noch eine Detektoreinrichtung 50 vorgesehen, über die die Erzeugung mehrerer phasenverschobener Abtastsignale aus den zugeführten, überlagerten Teilstrahlenbündeln erfolgt. Der Detektoreinrichtung 50 werden die von der Reflexions-Maßverkörperung 10 zurückreflektierten und überlagerten Teilstrahlenbündel über die Lichtleitfaser 30 zugeführt. Zum detaillierten Aufbau der Detektoreinrichtung 50 sei auf die weitere Beschreibung verwiesen. Von der Detektoreinrichtung 50 werden die verschiebungsabhängigen Abtastsignale einer - nicht gezeigten - Folgeelektronik zugeführt, die diese zum Zwecke der Lageregelung bzw. Positionssteuerung der zueinander beweglichen Objekte nutzt.

Die verschiedenen aktiven Komponenten der erfindungsgemäßen Positionsmesseinrichtung, wie insbesondere die Lichtquelle 40 und die Detektoreinrichtung 50 sind demzufolge räumlich entfernt vom eigentlichen Messort angeordnet und mit diesem lediglich über die Lichtleitfaser 30 optisch gekoppelt. Derart ist zum einen die Minimierung von Störeinflüssen auf diese Komponenten gewährleistet; zum anderen kann der passive Faseroptik-Abtastkopf 20 am Messort sehr kompakt ausgebildet werden.

Die Lichtleitfaser 30 ist vorzugsweise als Multimodefaser ausgebildet, über die sowohl die zur Beleuchtung genutzten Beleuchtungsstrahlenbündel zur Reflexions-Maßverkörperung 10 hin als auch die zur Detektion genutzten, überlagerten Teilstrahlenbündel von der Reflexions-Maßverkörperung 10 weg, in Richtung der Detektoreinheit 50 übertragbar sind.

Maßgeblich für die vorliegende Erfindung ist die Ausgestaltung des Faseroptik-Abtastkopfes 20, die für das erste Ausführungsbeispiel nachfolgend im Detail erläutert wird. Wie aus Figur 1 ersichtlich, umfasst der Faseroptik-Abtastkopf 20 im vorliegenden Ausführungsbeispiel eine Abtastplatte 21, die vor dem maßverkörperungsseitigen Ende der Lichtleitfaser 30 angeordnet ist, sowie ein refraktives optisches Element in Form einer Linse 22. Die Linse 22 ist hierbei zwischen der Lichtleitfaser 40 und der Abtastplatte 21 im Faseroptik-Abtastkopf 20 angeordnet. Über die Linse 22 wird das von der Lichtleiter-Austrittsfläche her einfallende Strahlenbündel auf dem Weg in Richtung Reflexions-Maßverkörperung 10 entlang der optischen Achse OA kollimiert bzw. die aus Richtung der Reflexions-Maßverkörperung 10 darauf einfallenden Teilstrahlenbündel wieder in die Lichtleitfaser 30 eingekoppelt bzw. auf die Lichtleitfaser-Eintrittsfläche fokussiert.

Als Abtastplatte 21 dient ein transparentes Trägersubstrat aus Glas, auf dessen der Lichtleitfaser 30 zugewandten Seite (Oberseite) ein erstes Transmissionsgitter 23 und auf der der Reflexions-Maßverkörperung 10 zugewandten Seite (Unterseite) ein zweites Transmissionsgitter 24 angeordnet ist.

Über das erste Transmissionsgitter 23 wird das darauf einfallende, über die Linse 22 kollimierte Strahlenbündel in mindestens zwei gebeugte Teilstrahlenbündel aufgespalten, die nach der Aufspaltung in der Abtastplatte 21 asymmetrisch in Bezug auf eine Abtastplatten-Normale weiterpropagieren; die in Figur 1 eingezeichnete optische Achse OA stellt im vorliegenden Ausführungsbeispiel etwa eine derartige Abtastplatten-Normale dar. Das erste Transmissionsgitter 23 ist als geblaztes Phasengitter ausgebildet, das eine maximale Beugungseffizienz in der +1. und -2. Beugungsordnung aufweist. Diese beiden Beugungsordnungen stellen somit die asymmetrisch weiterpropagierenden Teilstrahlenbündel im Abtaststrahlengang dar, die zur Erzeugung der verschiebungsabhängigen Abtastsignale genutzt werden und zwischen Aufspaltung und Wiedervereinigung unterschiedliche optische Weglängen zurücklegen.

Nach dem Durchlaufen der Abtastplatte 21 gelangen die aufgespaltenen Teilstrahlenbündel auf das zweite Transmissionsgitter 24, welches an der Seite der Abtastplatte 21 angeordnet ist, die der Reflexions-Maßverkörperung 10 zugewandt ist. Das zweite Transmissionsgitter 24 bewirkt eine Ablenkung der vom ersten Transmissionsgitter 23 her einfallenden Teilstrahlenbündel dergestalt, dass nach dem Durchlaufen des zweiten Transmissionsgitters 24 die Teilstrahlenbündel dann symmetrisch in Bezug auf eine Abtastplatten-Normale zwischen der Abtastplatte 21 und der Reflexions-Maßverkörperung 10 weiterpropagieren. Zudem erfolgt die Ablenkung der Teilstrahlenbündel über das zweite Transmissionsgitter 24 derart, dass diese im sog. Littrow-Winkel auf die Reflexions-Maßverkörperung 10 einfallen. Ein Einfall der Teilstrahlenbündel auf die Reflexions-Maßverkörperung 10 unter dem Littrow-Winkel hat zur Folge, dass diese unter dem gleichen Winkel von der Reflexions-Maßverkörperung 10 zurück zur Abtastplatte 21 reflektiert werden, unter dem sie auf die Abtastplatte 21 einfallen. Das zweite Transmissionsgitter 24 ist ebenfalls als geblaztes Phasengitter ausgebildet; optimiert ist dieses Phasengitter in Bezug auf eine maximale Beugungseffizienz in der +1. und -1. Beugungsordnung.

Nach der Rückreflexion an der Reflexions-Maßverkörperung 10 durchlaufen die Teilstrahlenbündel erneut das zweite Transmissionsgitter 24 an der Unterseite der Abtastplatte 21 und propagieren in der Abtastplatte 21 wieder asymmetrisch in Bezug auf eine Abtastplatten-Normale bis zur Wiedervereinigung am ersten Transmissionsgitter 23. Am ersten Transmissionsgitter 23 an der Oberseite der Abtastplatte 21 gelangen die an diesem Transmissionsgitter in +1. und -2. Beugungsordnung aufgespaltenen Teilstrahlenbündel zur interferierenden Überlagerung. Das überlagerte Paar von Teilstrahlenbündeln propagiert dann schließlich entlang der optischen Achse OA in Richtung der Linse 22 und wird über diese in die Lichtleitfaser 30 eingekoppelt.

Wie bereits in der DE 10 2007 024 349 A1 ist in der vorliegenden Erfindung eine wellenlängenabhängige Kodierung der phasenverschobenen Abtastsignale vorgesehen. Dies bedeutet, dass die phasenverschobenen Abtastsignale aus Komponenten des Beleuchtungsspektrums mit unterschiedlichen Wellenlängen erzeugt werden. Entscheidend hierfür ist dabei der asymmetrische Strahlengang der signalerzeugenden Teilstrahlenbündel zwischen der Aufspaltung und Wiedervereinigung am ersten Transmissionsgitter und den dadurch resultierenden unterschiedlichen optischen Weglängen, die die Teilstrahlenbündel zwischen Aufspaltung und Wiedervereinigung zurücklegen. Der asymmetrische Strahlengang in diesem Bereich des Strahlenganges bewirkt demzufolge eine wellenlängenabhängige Phasenverschiebung zwischen den aufgespaltenen Teilstrahlenbündeln.

Um die phasenverschobenen Abtastsignale wellenlängenabhängig zu kodieren, ist ferner vorgesehen, dass das erste Transmissionsgitter 23 einen periodischen Phasenverlauf $\Delta p(x)$ entlang der Messrichtung x besitzt. Diese Periodizität des ersten Transmissionsgitters 23 ist sowohl aus der Querschnittsansicht des ersten Transmissionsgitters 23 als auch aus der schematisierten Draufsicht in Figur 2a ersichtlich. Innerhalb einer Teilungsperiode $TP_{G1}$ des ersten Transmissionsgitters 23, das wie ersichtlich in vier Stufen quantisiert ausgebildet ist, sind im dargestellten Ausführungsbeispiel vier unterschiedlich phasenschiebende Teilungsbereiche vorgesehen, die vier phasenverschobenen Abtastsignalen mit den Phasenlagen 0°, 90°, 180°, 270° zugeordnet sind; in der Darstellung der Figur 2a sind die unterschiedlich phasenschiebenden Teilungsbereiche mit verschiedenen Schraffuren versehen. Selbstverständlich könnte das erste Transmissionsgitter auch in mehr als vier Stufen quantisiert ausgebildet werden, z.B. in acht Stufen.

Der Phasenverlauf $\Delta p(x)$ des ersten Transmissionsgitters 23 entlang der Messrichtung x lässt sich für das erste Ausführungsbeispiel hierbei folgendermaßen beschreiben:

$$\Delta p(x) = \frac{1}{2\pi} Arctan2 \left( sin\left(\frac{2\pi ix}{TP_{G1}}\right) + sin\left(\frac{2\pi imx}{TP_{G1}}\right), cos\left(\frac{2\pi ix}{TP_{G1}}\right) + cos\left(\frac{2\pi imx}{TPd_{G1}}\right) \right)$$

(Gl.1)

m := 2, 0, -2, -3,... (neben der +1. Beugungsordnung des ersten Transmissionsgitters verwendete weitere, asymmetrische Beugungsordnung; oben: m = -2)
$TP_{G1}$ := Teilungsperiode des ersten Transmissionsgitters

Auch das zweite Transmissionsgitter 24 an der Abtastplatten-Unterseite ist in vier Stufen quantisiert ausgebildet, wie dies der Querschnittsansicht in Figur 1 und der Draufsicht in Figur 2b zu entnehmen ist. Innerhalb einer Teilungsperiode $TP_{G2}$ des zweiten Transmissionsgitters 24 sind ebenfalls vier unterschiedlich phasenschiebende Teilungsbereiche vorgesehen, die den vier phasenverschobenen Abtastsignalen mit den Phasenlagen 0°, 90°, 180°, 270° zugeordnet sind.

Zur konkreten Dimensionierung eines Ausführungsbeispiels der erfindungsgemäßen optischen Positionsmesseinrichtung ist eine Betrachtung der Wellenvektoren bzw. k-Vektoren der involvierten Strahlenbündel, Teilstrahlenbündel und Gitter hilfreich, wie nachfolgend gezeigt sei.

So sei der k-Vektor des resultierenden Teilstrahlenbündels +1. Beugungsordnung am ersten Transmissionsgitter 23 mit $k_1$ bezeichnet; folglich ergibt sich der k-Vektor des Teilstrahlenbündels -2. Beugungsordnung am selben Transmissionsgitter 23 zu $-2k_1$. Am zweiten Transmissionsgitter 24 mit dem k-Vektor $k_2$ resultiert für beide Teilstrahlenbündel aufgrund der dort erforderlichen Symmetrisierung des weiteren Strahlenverlaufs die Addition eines k-Vektors $k_2$ = $k_1$/2. Es ergeben sich für die beiden, in Richtung der Reflexions-Maßverkörperung 10 weiterpropagierenden Teilstrahlenbündel somit k-Vektoren $k_{Strahl}$ gemäß $k_{Strahl}$ = 3 $k_1$/2 und $k_{Strahl}$ = -3 $k_1$/2. Die k-Vektoren $k_{Strahl}$ sind für beide Teilstrahlenbündel in diesem Strahlengangabschnitt demnach betragsmäßig identisch. Um die Littrow-Bedingung zu erfüllen, muss der Betrag des k-Vektors $k_M$ der Reflexions-Maßverkörperung 10 doppelt so groß gewählt werden wie die Beträge der jeweiligen k-Vektoren $k_{Strahl}$, d.h. es muss $k_M$ = $3k_1$ gelten.

Alternativ zur oben erläuterten Ausbildung des ersten Transmissionsgitters 23 kann vorgesehen werden, dieses für andere asymmetrisch in der Abtastplatte 21 weiterpropagierenden Beugungsordnungen zu optimieren, also nicht für die -2. und + 1. Beugungsordnung, sondern für andere asymmetrische Beugungsordnung-Kombinationen, z.B. 0. und 1. Beugungsordnung oder +.1 und -3. Beugungsordnung etc.. Wird etwa neben der +1. Beugungsordnung anstelle der -2. Beugungsordnung eine andere, nachfolgend m. Beugungsordnung genannte Beugungsordnung verwendet, dann gilt für den k-Vektor $k_2$ des zweiten Transmissionsgitters 23 auf der Unterseite der Abtastplatte 21:

$$k_2 = (-mk_1 - k_1)/2 \qquad \text{(Gl. 2)}$$

$k_2$ := k-Vektor des zweiten Transmissionsgitters
$k_1$ := k-Vektor des ersten Transmissionsgitters
m := 2, 0, -2, -3, ... (neben der +1. Beugungsordnung des ersten Transmissionsgitters verwendete weitere, asymmetrische Beugungsordnung; oben: m = -2)

Somit ergibt sich für die k-Vektoren $k_{Strahl}$ der beiden Teilstrahlenbündel, die auf die Reflexions-Maßverkörperung 10 treffen:

$$k_{Strahl} = \pm(-mk_1 + k_1)/2 \qquad \text{(Gl. 3)}$$

$k_{Strahl}$ := k-Vektoren der beiden Teilstrahlenbündel, die auf die Reflexions-Maßverkörperung treffen
$k_2$ := k-Vektor des zweiten Transmissionsgitters
$k_1$ := k-Vektor des ersten Transmissionsgitters
m := 2, 0, -2, -3, ... (neben der +1. Beugungsordnung des ersten Transmissionsgitters verwendete weitere, asymmetrische Beugungsordnung; oben: m = -2)

Der Betrag des k-Vektors $k_M$ der Reflexions-Maßverkörperung 10 ergibt sich somit gemäß

$$k_M = 2\,(-mk_1 + k_1) \qquad \text{(Gl. 4)}$$

$k_M$ := k-Vektor der Reflexions-Maßverkörperung
$k_1$ := k-Vektor des ersten Transmissionsgitters
m := 2, 0, -2, -3, ... (neben der +1. Beugungsordnung des ersten Transmissionsgitters verwendete weitere, asymmetrische Beugungsordnung; oben: m = -2)

Aufgelöst nach $k_1$ ergibt sich aus Gl. 4

$$k_1 = -\frac{k_M}{m-1} \qquad \text{(Gl. 4a)}$$

Entsprechend gilt für die Teilungsperioden $TP_{G1}$ und $TP_{G2}$ des ersten und zweiten Transmissionsgitters

$$TP_{G1} = -(m-1) * TP_M \qquad \text{(Gl. 4b)}$$

und

$$T_{G2} = -\frac{2}{m+1} * T_{G1} \qquad \text{(Gl. 4c)}$$

$k_M$ := k-Vektor der Reflexions-Maßverkörperung
$k_1$ := k-Vektor des ersten Transmissionsgitters
m := 2, 0, -2, -3, ... (neben der +1. Beugungsordnung des ersten Transmissionsgitters verwendete weitere, asymmetrische Beugungsordnung; oben: m = -2)

Wird die Teilungsperiode $TP_M$ der Reflexions-Maßverkörperung 10 etwa $TP_M$ = 4 $\mu$m gewählt, so ist mit m = -2 gemäß Gleichung (4b) die Teilungsperiode $TP_{G1}$ des ersten Transmissionsgitters 23 gemäß $TP_{G1}$ = 12 $\mu$m zu wählen und entsprechend Gleichung (4c) die Teilungsperiode $TP_{G2}$ des zweiten Transmissionsgitters 24 gemäß $TP_{G2}$ = 24 $\mu$m.

Wie bereits oben erwähnt, resultiert neben der nunmehr möglichen Abtastung von Reflexions-Maßverkörperungen mit sehr kleinen Teilungsperioden $TP_M$ als weiterer Vorteil der erfindungsgemäßen Vorrichtung, dass die Erzeugung der Abtastsignale weitgehend unabhängig von Schwankungen des Abtastabstands zwischen der Reflexions-Maßverkörperung 10 und dem Faseroptik-Abtastkopf 20 ist. Dies ist darauf zurückzuführen, dass zwischen dem zweiten Transmissionsgitter 24 und der Reflexions-Maßverkörperung 10 die Teilstrahlenbündel symmetrisch in Bezug auf eine Abtastplatten-Normale propagieren. Aufgrund der Beleuchtung der Reflexions-Maßverkörperung 10 durch zwei Teilstrahlenbündel mit symmetrischen effektiven Beugungsordnungen ist der Gangunterschied zwischen den interferierenden Teilstrahlenbündeln unabhängig vom Abtastabstand.

In der erfindungsgemäßen optischen Positionsmesseinrichtung werden die phasenverschobenen Abtastsignale aus unterschiedlichen spektralen Komponenten des Beleuchtungsspektrums generiert. Um dies für die gewünschte Anzahl von phasenverschobenen Abtastsignalen zu ermöglichen, sind bestimmte Überlegungen zur Dimensionierung des Systems erforderlich. So benötigt man hierzu zunächst die Phasendifferenz $\Delta\rho(\lambda_1, \lambda_2)$ zweier Signale aus verschiedenen Wellenlängen $\lambda_1, \lambda_2$ des Beleuchtungsspektrums, ausgedrückt in Signalperioden. Dieser Zusammenhang ergibt sich im ersten Ausführungsbeispiel folgendermaßen:

$$\Delta p(\lambda_1, \lambda_2) = 2\, d_{Ap} \bullet$$

$$\left\{ \frac{n_{ref1}}{\lambda_1} \left[ \sqrt{1 - \left(\frac{\lambda_1}{TP_{G1}\, n_{ref1}}\right)^2} - \sqrt{1 - \left(\frac{m\lambda_1}{TP_{G1}\, n_{ref1}}\right)^2} \right] - \right.$$

$$\left. \frac{n_{ref2}}{\lambda_2} \left[ \sqrt{1 - \left(\frac{\lambda_2}{d_{Ap}\, n_{ref1}}\right)^2} - \sqrt{1 - \left(\frac{m\lambda_2}{d_{Ap}\, n_{ref1}}\right)^2} \right] \right\} \qquad \text{(Gl.5)}$$

$\lambda_1, \lambda_2$ := verschiedene Wellenlängen aus dem Beleuchtungsspektrum

m := 2, 0, -2, -3,... (neben der +1. Beugungsordnung des ersten Transmissionsgitters verwendete weitere, asymmetrische Beugungsordnung; oben: m = - 2)

$n_{ref1}$, $n_{ref2}$ := dispersionsabhängige Brechungsindizes der Abtastplatte bei den Wellenlängen $\lambda_1, \lambda_2$

$TP_{G1}$ := Teilungsperiode des ersten Transmissionsgitters

$d_{Ap}$ := Dicke der Abtastplatte

Nachfolgend sei ein konkretes Dimensionierungsbeispiel für die erste Ausführungsform der erfindungsgemäßen optischen Positionsmesseinrichtung angegeben.

Verwendet wird hierbei als Lichtquelle eine Infrarot-LED mit einer Zentralwellenlänge von 850nm und einer spektralen Breite von 60nm. Sollen ausgangsseitig vier phasenverschobene Abtastsignale gewonnen werden, so bietet sich die zweifache Abtastung jeder der vier Signalanteile aus dem gesamten Wellenlängenbereich der Lichtquelle an. Es müssen also acht Signalanteile mit einer Phasenverschiebung von jeweils 90° aus dem verfügbaren Lichtquellen-Spektralbereich von 60nm gewonnen werden. Mit entsprechend hoher empfängerseitiger spektraler Auflösung ist auch eine noch höherzahlige Abtastung der Signalanteile denkbar. Dies führt zu einer besseren Stabilität bei einer Veränderung des Lichtquellen-Spektrums, beispielsweise durch Temperatureinflüsse. Zur Erzeugung der acht Signalanteile bei der vorgesehenen Zweifachabtastung muss die Dicke $d_{Ap}$ der Abtastplatte 21 und/oder die Gitterparameter der darauf angeordneten Transmissionsgitter so dimensioniert werden, dass sich bei einer Wellenlängenverschiebung von 30nm eine Phasenverschiebung von 1 (360°) ergibt. Im konkreten Ausführungsbeispiel wird Quarz als Material für die Abtastplatte 21 verwendet ($n_{ref} \approx 1.452$). Angenommen werden weiterhin die oben aufgeführten Teilungsperioden $TP_M$ = 4 $\mu$m, $TP_{G1}$ = 12 $\mu$m, $TP_{G2}$ = 24 $\mu$m für die Reflexions-Maßverkörperung 10 sowie das erste und zweite Transmissionsgitter 23, 24. Das Auflösen der obigen Gleichung (5) nach der Dicke $d_{Ap}$ der Abtastplatte 21 ergibt eine erforderliche Dicke $d_{Ap}$ der Abtastplatte gemäß $d_{Ap}$ = 2.28mm. Die Dicke $d_{Ap}$ der Abtastplatte 21 und/oder die Gitterparameter der darauf angeordneten Transmissionsgitter wird in der erfindungsgemäßen Positionsmesseinrichtung demzufolge so dimensioniert, dass gemäß Gleichung (5) die entsprechende Phasenverschiebung je Wellenlängenänderung resultiert.

In Figur 1 ist neben den bislang erläuterten Komponenten der erfindungsgemäßen optischen Positionsmesseinrichtung noch die Detektoreinrichtung 50 gezeigt, die zur Detektion der wellenlängenkodierten, phasenverschobenen Abtastsignale dient.

Zu diesem Zweck umfasst die Detektoreinrichtung 50, die am maßverkörperungs-abgewandten Ende der Lichtleitfaser 30 angeordnet ist, ein schematisch angedeutetes Aufspaltmittel 51 zur wellenlängenabhängigen Auftrennung der überlagerten Teilstrahlenbündel, die über die Lichtleitfaser 30 in Richtung Detektoreinrichtung 50 übertragen werden. Das Aufspaltmittel 51 ist im vorliegenden Beispiel als dispersives Element in Form eines Beugungsgitters ausgebildet. Über eine dem Aufspaltmittel 51 nachgeordnete Linse 52 wird das Licht auf einen strukturierten Photodetektor 53 fokussiert, der hier aus acht einzelnen Detektorelementen besteht. Das abgebildete Licht einer bestimmten Wellenlänge bildet in der Fokusebene hierbei einen Kreis, dessen Durchmesser durch das Produkt aus dem Faserkern-Durchmesser der Lichtleitfaser 30 und dem Brennweitenverhältnis der Linse 52 und der Einkoppellinse 43 gegeben ist. Die Dispersion des Aufspaltmittels 51 muss daher hinreichend groß sein, damit die Kreisbilder des Faserendes räumlich getrennt vorliegen und damit aufgelöst detektierbar sind. Im vorliegenden Ausführungsbeispiel wurde von einer Phasenverschiebung von 30nm / 360° ausgegangen.

Wenn z.B. vier um jeweils 90° phasenverschobene Abtastsignale erzeugt werden, so ist entsprechend eine spektrale Auflösung von 7,5nm erforderlich. Jedes Abtastsignal kann hierbei mehrfach mit einer Phasenverschiebung von jeweils 360° abgetastet werden. Auf diese Art und Weise kann das vollständige Lichtquellenspektrum genutzt werden, während etwa eine temperaturinduzierte Wellenlängenverschiebung dann nur geringe Auswirkungen auf die Amplituden der erzeugten Abtastsignale hat.

Nicht in Figur 1 dargestellt sind weitere Komponenten zur Signalverarbeitung, die ggf. in der Detektoreinrichtung 50 noch zusätzlich angeordnet werden können. Hierzu gehören etwa Verstärker-Bausteine, A/D-Wandler etc., über die eine weitere elektronische Verarbeitung und Aufbereitung der Abtastsignale erfolgt, bevor diese zur Weiterverarbeitung an eine nicht gezeigte Folgeelektronik übertragen werden.

Um eine hinreichende Auflösung bei geringer Größe der Auswerteeinheit zu erreichen, ist auch die Verwendung mehrerer im Strahlengang hintereinander angeordneter Beugungsgitter als Aufspaltmittel 51 möglich. Eine hohe Begungseffizienz der Beugungsgitter kann dadurch erreicht werden, wenn diese annähernd unter dem Littrow-Winkel beleuchtet werden. Unter dieser Bedingung ist die Brennweite f der Einkoppellinse 43 vorzugsweise wie folgt zu dimensionieren.

$$f = \frac{D_f}{N * \Delta\lambda} \sqrt{d^2 - \left(\frac{\lambda}{2}\right)^2} \quad \text{(Gl. 6)}$$

mit:

λ := mittlere Wellenlänge
d := Gitterkonstante des Beugungsgitters
d := Durchmesser des Faserendes
N := Anzahl der verwendeten Beugungsgitter
Δλ := erforderliche Wellenlängenauflösung.

Vorteilhaft ist desweiteren eine Reduktion des Gleichlichtanteils, das durch Reflexion des eingekoppelten Lichtes am Faserende in den Detektionskanal gelangt. Dies kann durch Aufbringen einer Antireflexschicht auf das Faserende erreicht werden. Alternativ hierzu oder aber zusätzlich kann durch Schrägschliff des Faserendes verhindert werden, dass das beim Einkoppeln reflektierte Licht in den Detektionskanal gelangt.

Alternativ oder ergänzend kann in der erfindungsgemäßen Vorrichtung ferner das unmodulierte Spektrum mitgemessen werden. Dazu kann das am schrägen Faserende reflektierte Licht z.B. durch ein Prisma oder ein diffraktives Element zwischen dem auskoppelseitigen Faserende und der Einkoppellinse derart abgelenkt werden, so dass das reflektierte Licht virtuell von einem zum Faserende versetztem Punkt ausgesendet wird. Dadurch erhält man in der Ebene der Detektorelementplatine räumlich versetzt neben dem modulierten Spektrum noch das unmodulierte Spektrum, welches durch zusätzliche Detektorelemente detektierbar ist. Die derart gewonnenen Informationen können dazu benutzt werden, um Signalfehler, die sich aus einer Veränderung des Beleuchtungsspektrums ergeben, zu korrigieren.

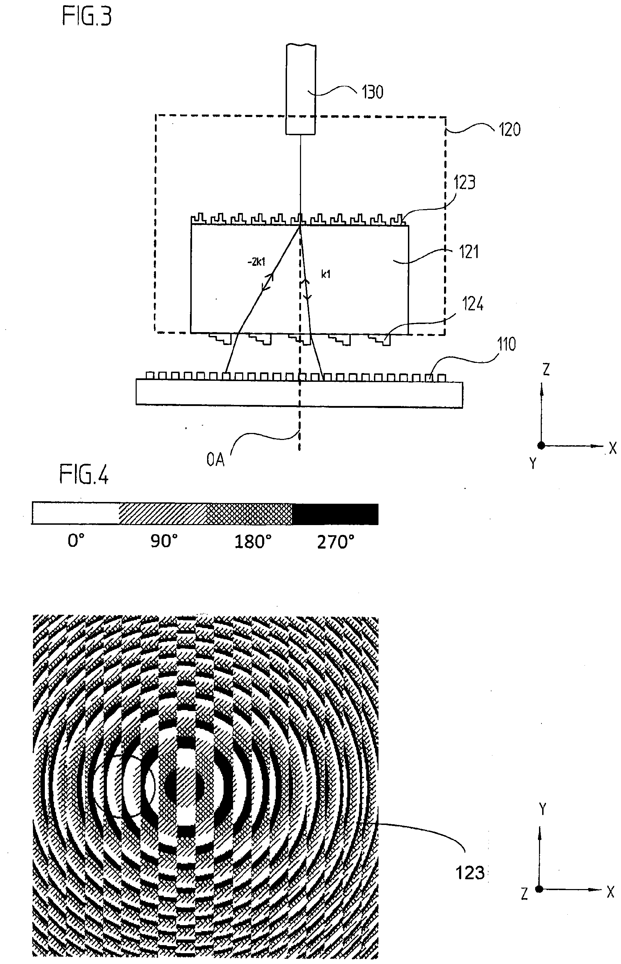

Ein gegenüber dem ersten Ausführungsbeispiel geringfügig abgewandeltes zweites Ausführungsbeispiel der erfindungsgemäßen optischen Positionsmesseinrichtung ist in Figur 3 teilweise dargestellt; gezeigt sind hierbei lediglich die Komponenten am Messort, d.h. der Faseroptik-Abtastkopf 120 und die Reflexions-Maßverkörperung 110. Verzichtet wurde auf die Darstellung der verschiedenen Komponenten am maßverkörperungs-abgewandten Ende der Lichtleitfaser 130; diese sind identisch zum ersten Ausführungsbeispiel ausgebildet. Nachfolgend seien lediglich die maßgeblichen Unterschiede zum ersten Ausführungsbeispiel erläutert.

So enthält im zweiten Ausführungsbeispiel der Faseroptik-Abtastkopf 120 keine separate Linse mehr zwischen der Lichtleitfaser 130 und dem ersten Transmissionsgitter 123 auf der Oberseite der Abtastplatte 121. Die entsprechende optische Funktionalität dieser Linse wird vielmehr zusätzlich in das erste Transmissionsgitter 123 integriert. Das bedeutet, dass das erste Transmissionsgitter 123 neben den bereits oben erläuterten optischen Funktionen auch eine kollimierende Wirkung auf das von der Lichtleitfaser 120 her einfallende Strahlenbündel ausübt. Die in umgekehrter Richtung propagierenden überlagerten Teilstrahlenbündel werden darüber in die Lichtleitfaser 130 eingekoppelt und hierzu in die entsprechende Lichtleitfaser-Eintrittsfläche fokussiert. Es resultiert ein gegenüber dem ersten Ausführungsbeispiel nochmals kompakterer Faseroptik-Abtastkopf 120; zudem entfällt der Justageaufwand bzgl. einer separaten Linse bei der Fertigung der erfindungsgemäßen Vorrichtung.

Eine Draufsicht auf den dann resultierenden Phasenverlauf des ersten Transmissionsgitters 123 mit der zusätzlichen optischen Funktionalität zeigt Figur 4.

Ansonsten sei in Bezug auf die Erzeugung phasenverschobener Abtastsignale und weitere Einzelheiten auf die Beschreibung des ersten Ausführungsbeispiels verwiesen.

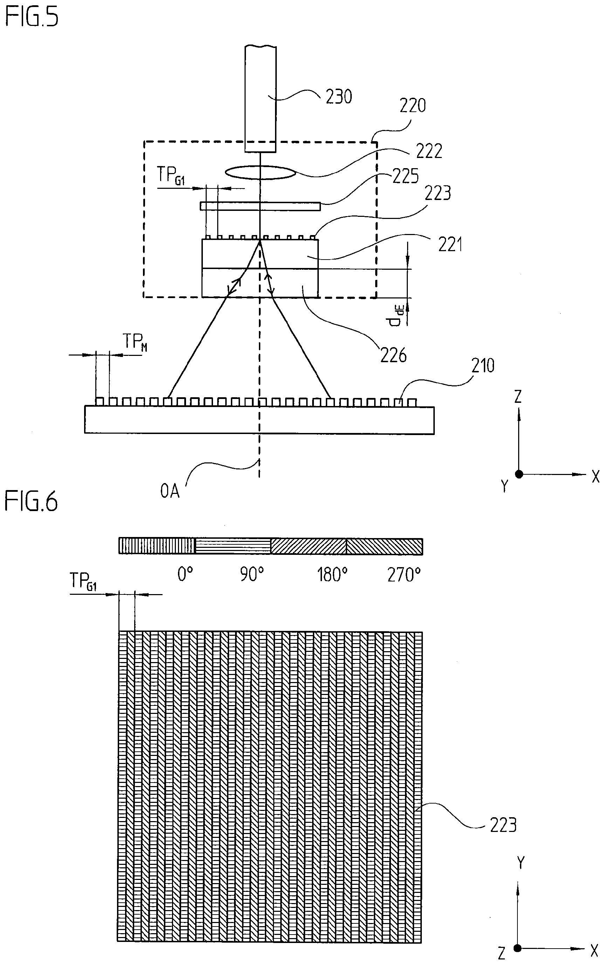

Ein drittes Ausführungsbeispiel der erfindungsgemäßen optischen Positionsmesseinrichtung ist in den Figuren 5 und 6 dargestellt. Nachfolgend wird bei der Beschreibung desselbigen primär auf die maßgeblichen Unterschiede zu den ersten Ausführungsbeispielen eingegangen.

Gezeigt ist in Figur 5 erneut nur der Bereich des Messortes, Figur 6 veranschaulicht schematisiert den Phasenverlauf des ersten Transmissionsgitters. Die Einkopplung von Licht in die Lichtleitfaser 230 sowie die Detektion der überlagerten Teilstrahlenbündel erfolgt analog zu den bisher erläuterten Ausführungsbeispielen.

Das aus der Lichtleitfaser 230 im Faseroptik-Abtastkopf 220 austretende Strahlenbündel wird wie im ersten Ausführungsbeispiel über eine Linse 222 auf dem Weg in Richtung Reflexions-Maßverkörperung 210 entlang der optischen Achse OA kollimiert. Das kollimierte Strahlenbündel durchläuft dann einen Polarisator 225, über den das Strahlenbündel eine lineare Polarisation erhält, wobei die Polarisationsrichtung in Messrichtung x orientiert ist. Anschließend trifft das linear polarisierte Strahlenbündel auf die Abtastplatte 221, und zwar auf ein erstes Transmissionsgitter 223, das auf der der Lichtleitfaser 230 zugewandten Seite der Abtastplatte 221 angeordnet ist. Über das erste Transmissionsgitter 223 wird in diesem Ausführungsbeispiel nunmehr im Unterschied zu den beiden vorhergehenden Varianten eine Aufspaltung des einfallenden Strahlenbündels in Teilstrahlenbündel +1. und -1. Beugungsordnung bewirkt. Das erste Transmissionsgitter 223 ist hierbei als Phasengitter ausgebildet und besitzt eine Teilungsperiode $TP_{G1}$, die der halben Teilungsperiode $TP_M$ der Reflexions-Maßverkörperung 210 entspricht.

Die aufgespaltenen Teilstrahlenbündel propagieren dann durch die Abtastplatte 221 und gelangen in ein doppelbrechendes Element 226, das auf der der Reflexions-Maßverkörperung 210 zugewandten Seite der Abtastplatte 221 angeordnet ist. Im doppelbrechenden Element 226 der Abtastplatte 221 propagieren die aufgespaltenen Teilstrahlenbündel sodann asymmetrisch weiter. Dies wird verursacht durch die gewählte Orientierung des doppelbrechenden Elements 226 derart, dass aufgrund der linearen Polarisation der Teilstrahlenbündel in Messrichtung x die Ausbreitung der ordentlichen Strahlen im doppelbrechenden Element 226 unterdrückt wird. Ferner werden die Polarisationsellipsoiden des doppelbrechenden Elements 226 in einem Winkel ungleich 0° und ungleich 90° zur Abtastplatten-Normale ausgerichtet. Darüber wird erreicht, dass die Brechungsindizes der beiden außerordentlichen Strahlen, die ihren Ursprung in den beiden 1. Beugungsordnungen des ersten Transmissionsgitters 223 haben, unterschiedlich sind. Dies ist auf die unterschiedlichen Relativwinkel der Hauptachsen des doppelbrechenden Elements 225 zu den Ausbreitungsrichtungen der beiden Teilstrahlenbündel zurückzuführen

Zur konkreten Dimensionierung einer derartigen Ausführungsform der erfindungsgemäßen Positionsmesseinrichtung ist wiederum die Kenntnis der Phasendifferenz $\Delta p(\lambda_1, \lambda_2)$ zweier Signale basierend auf verschiedenen Wellenlängen $\lambda_1, \lambda_2$, ausgedrückt in Signalperioden, erforderlich. Diese Phasendifferenz $\Delta p(\lambda_1, \lambda_2)$ ist im vorliegenden Ausführungsbeispiel proportional zur Dicke $d_{dE}$ des doppelbrechenden Elements 226 und ergibt sich folgendermaßen:

$$\Delta p(\lambda_1, \lambda_2) = d_{dE} \cdot$$

$$\left\{ \frac{1}{\lambda_1} \left[ n_r(\lambda_1, \beta_1(\lambda_1)) \sqrt{1 - \left( \frac{\lambda_1}{TP_{G1}\, n_r(\lambda_1, \beta_1(\lambda_1))} \right)^2} - n_r(\lambda_1, \beta_2(\lambda_1)) \sqrt{1 - \left( \frac{\lambda_1}{TP_{G1}\, n_r(\lambda_1, \beta_2(\lambda_1))} \right)^2} \right] - \right.$$

$$\left. \frac{1}{\lambda_2} \left[ n_r(\lambda_2, \beta_1(\lambda_2)) \sqrt{1 - \left( \frac{\lambda_2}{TP_{G1}\, n_r(\lambda_2, \beta_1(\lambda_2))} \right)^2} - n_r(\lambda_2, \beta_2(\lambda_2)) \sqrt{1 - \left( \frac{\lambda_2}{TP_{G1}\, n_r(\lambda_2, \beta_2(\lambda_2))} \right)^2} \right] \right\}$$

(Gl. 7)

$\lambda_1, \lambda_2$ := verschiedene Wellenlängen aus dem Beleuchtungsspektrum

$d_{dE}$ := Dicke des doppelbrechenden Elements

$\beta_1, \beta_2$ := Beleuchtungswinkel, unter dem die beiden aufgespaltenen Teilstrahlenbündel gegen eine Oberflächennormale auf das doppelbrechende Element einfallen

$TP_{G1}$ := Teilungsperiode des ersten Transmissionsgitters

$n_r$ := Brechungsindex des doppelbrechenden Elements, abhängig von der Wellenlänge und der Beleuchtungsrichtung des außerordentlichen Strahles

Hierbei hängt der Brechungsindex $n_r$ sowohl von der jeweiligen Wellenlänge $\lambda_1$, $\lambda_2$ als auch von der Beleuchtungsrichtung $\beta_1$ bzw. $\beta_2$ ab. Die beiden unterschiedlichen Beleuchtungsrichtungen $\beta_1$ und $\beta_2$ ergeben sich aus den beiden Beugungsordnungen, die am ersten Transmissionsgitter 223 resultieren. Da der Brechungsindex $n_r$ wiederum richtungsabhängig ist, berechnet man $\beta_1$ und $\beta_2$ numerisch über eine Nullstellensuche aus der nachfolgenden Brechungsformel für doppelbrechende Medien:

$$0 = \mp \frac{\lambda_i}{TP_{G1}} + n_r(\gamma - \beta_{1,2})\sin\beta_{1,2} \qquad \text{(Gl. 8)}$$

$\lambda_i$ := verschiedene Wellenlängen aus dem Beleuchtungsspektrum

$n_r$ := richtungsabhängiger Brechungsindex des doppelbrechenden Elements, abhängig von der Wellenlänge und der Beleuchtungsrichtung des außerordentlichen Strahles

$\beta_{1,2}$ := Winkel, unter dem die beiden aufgespalteten Teilstrahlenbündel gegen eine Oberflächennormale durch das doppelbrechende Element propagieren

$\gamma$ := Orientierungswinkel des Materials des doppelbrechenden Elements zur Oberflächennormale

Die richtungsabhängige Brechungsindex $n_r$ ist dabei gegeben durch

$$n_r(\theta) = \frac{n_o n_e}{\sqrt{n_o^2 \sin^2(\theta) + n_e^2 \cos^2(\theta)}} \qquad \text{(Gl. 9)}$$

$n_r$ := richtungsabhängiger Brechungsindex des doppelbrechenden Elements, abhängig von der Wellenlänge und der Beleuchtungsrichtung des außerordentlichen Strahles

$n_o$ := Brechungsindex des ordentlichen Strahls

$n_e$ := Brechungsindex des außerordentlichen Strahls.

$\Theta$ := Winkel zwischen Strahlrichtung $\beta_1$, $\beta_2$ und Orientierungswinkel $\gamma$ des doppelbrechenden Elements

Die Brechungsindizes $n_0$, $n_e$ sind aus der Dispersionsformel des entsprechenden doppelbrechenden Materials bei der jeweiligen Wellenlänge zu ermitteln.

Nachfolgend sei ein konkretes Dimensionierungsbeispiel für die dritte Ausführungsform der erfindungsgemäßen Positionsmesseinrichtung angegeben.

Es wird wiederum eine Lichtquelle verwendet, die eine Zentralwellenlänge von 850nm und eine spektrale Breite von 60nm besitzt. Als Material für das doppelbrechende Element 226 ist Kalkspat vorgesehen.

Im Allgemeinen sinkt die erforderliche Dicke $d_{dE}$ des doppelbrechenden Elements 226 mit kleiner werdender Teilungsperiode $TP_M$ der Reflexions-Maßverkörperung 210, da sich die Beugungswinkel der beiden transmittierten +/- 1. Beugungsordnungen im doppelbrechenden Element 226 stärker unterscheiden. Daher wird im Folgenden von einer Teilungsperiode $TP_{G1}$ des ersten Transmissionsgitters 223 von $TP_{G1} = 4\mu m$ ausgegangen. Es ergibt sich eine Teilungsperiode $TP_M$ der Reflexions-Maßverkörperung 210 zu $TP_M = 2\mu m$ und eine Signalperiode der Abtastsignale von $1\mu m$. Ferner sei ein Orientierungswinkel $\gamma = 45°$ angenommen. Soll wiederum eine Phasenverschiebung von 360° je 30nm erreicht werden, dann ist eine Dicke $d_{dE}$ des doppelbrechenden Elements 226 gemäß $d_{dE} = 3,71mm$ erforderlich.

Eine nochmals kompaktere Ausgestaltung bzw. geringere Dicke $d_{dE}$ des doppelbrechenden Elements 226 erzielt man durch den Einsatz von $AgGaSe_2$ (Silbergalliumselenid) als doppelbrechendes Material. Unter gleichen Bedingungen wie vorab erläutert, ergibt sich eine Dicke $d_{dE}$ des doppelbrechenden Elements 226 gemäß $d_{dE} = 0.47mm$.

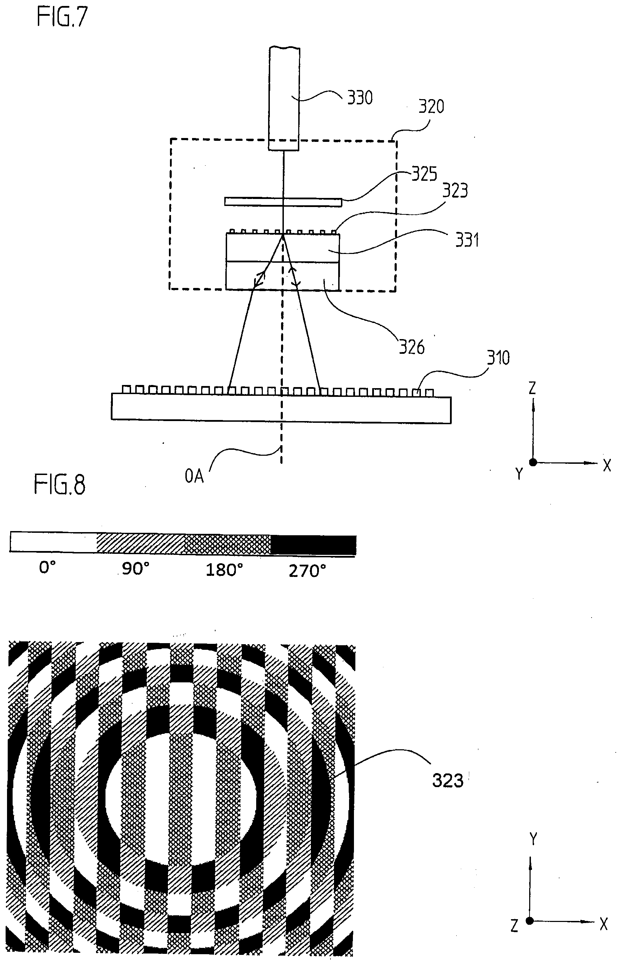

Abschließend sei anhand der Figuren 7 und 8 ein viertes Ausführungsbeispiel der erfindungsgemäßen optischen Positionsmesseinrichtung beschrieben.

Das vierte Ausführungsbeispiel basiert auf dem vorhergehend erläuterten, dritten Ausführungsbeispiel und unterscheidet sich von diesem i.w. nur dadurch, dass wie bereits im zweiten Ausführungsbeispiel vorgesehen, die optische Funktionalität der Linse 222 nunmehr in das erste Transmissionsgitter 323 auf der Oberseite der Abtastplatte 321 integriert wird. Das erste Transmissionsgitter 323 übt neben den strahlaufspaltenden optischen Funktionen auch eine kollimierende Wirkung auf das von der Lichtleitfaser 320 her einfallende Strahlenbündel aus. Die in umgekehrter Richtung propagierenden überlagerten Teilstrahlenbündel werden darüber in die Lichtleitfaser 330 eingekoppelt und hierzu in die entsprechende Lichtleitfaser-Eintrittsfläche fokussiert. Wiederum resultiert ein gegenüber dem dritten Ausführungsbeispiel nochmals kompakterer Faseroptik-Abtastkopf 320.

Eine Draufsicht auf den dann resultierenden Phasenverlauf des ersten Transmissionsgitters 323 mit der zusätzlichen optischen Funktionalität zeigt Figur 8.

Ansonsten sei in Bezug auf die Erzeugung phasenverschobener Abtastsignale und weitere Einzelheiten auf die Beschreibung des dritten Ausführungsbeispiels bzw. der anderen Ausführungsbeispiele verwiesen.

Über die erläuterten Ausführungsformen hinaus, lässt sich die vorliegende Erfindung natürlich noch weiter abwandeln.

Wie im Zusammenhang mit der Beschreibung des zweiten Ausführungsbeispiels einer geeigneten Abtastplatte erwähnt wurde, kann es ggf. nötig sein, anstelle einer einzigen breitbandigen Lichtquelle eine zusammengesetzte Lichtquelle bzw. Lichtquelleneinheit zu verwenden, die aus mehreren Einzellichtquellen mit unterschiedlichen einzelnen Wellenlängen besteht. Je nach Ausführungsform können hierbei als Lichtquelle Laserdioden, VCSELs, LEDS, OLEDs etc. zum Einsatz kommen. Mittels dichroitischer Spiegel oder einem geeigneten dispersiven Element kann das Licht aus diesen verschiedenen Lichtquellen vereinigt und gemeinsam in die Lichtleitfaser eingekoppelt werden.

Neben der Realisierung eines Systems mit vier, um je 90° phasenverschobenen Abtastsignalen kann im Rahmen der vorliegenden Erfindung selbstverständlich auch eine Variante vorgesehen werden, in der drei, um je 120° phasenverschobene Abtastsignale erzeugt werden; auch in diesem Fall ist analog zum oben erläuterten Vier-Phasen-System eine Mehrfachabtastung realisierbar usw..

**Patentansprüche**

1.  Optische Positionsmesseinrichtung zur Erzeugung mehrerer phasenverschobener Abtastsignale bezüglich der Relativposition eines Faseroptik-Abtastkopfes (20; 120; 220; 320) und einer hierzu in mindestens einer Messrichtung beweglichen Reflexions-Maßverkörperung (10; 110; 210; 310), wobei im Faseroptik-Abtastkopf (20; 120; 220; 320) eine Abtastplatte (21; 121; 221; 321) vor dem maßverkörperungsseitigen Ende einer Lichtleitfaser (30; 130; 230; 330) angeordnet ist und eine wellenlängenabhängige Kodierung der phasenverschobenen Abtastsignale erfolgt, indem die phasenverschobenen Abtastsignale aus Komponenten des Beleuchtungsspektrums mit unterschiedlichen Wellenlängen erzeugt werden, wobei die Abtastplatte (21; 121; 221; 321) derart ausgebildet ist, dass

    - ein auf die Abtastplatte (21; 121; 221; 321) einfallendes Strahlenbündel eine Aufspaltung in mindestens zwei Teilstrahlenbündel erfährt, welche die Reflexions-Maßverkörperung (10; 110; 210; 310) beaufschlagen und anschließend zur Erzeugung der phasenverschobenen Abtastsignale wiedervereinigt miteinander interferieren und
    - die Teilstrahlenbündel zwischen der Aufspaltung und der Wiedervereinigung unterschiedliche optische Weglängen zurücklegen, wobei
    - am maßverkörperungs-abgewandten Ende der Lichtleitfaser (30; 130; 230; 330)

        - eine spektral breitbandige Lichtquelle (40) oder
        - mehrere Lichtquellen, die Strahlung unterschiedlicher Wellenlängen emittieren,

    angeordnet sind, deren Strahlung als Beleuchtungsstrahlenbündel über Einkoppelmittel in die Lichtleitfaser (30; 130; 230; 330) einkoppelbar ist und
    - am maßverkörperungs-abgewandten Ende der Lichtleitfaser (30; 130; 230; 330) eine Detektoreinrichtung (50) angeordnet ist, die

        - Aufspaltmittel (51) zur wellenlängenabhängigen Trennung der wiedervereinigten Teilstrahlenbündel sowie
        - mehrere optoelektronische Detektorelemente umfasst, denen die getrennten Teilstrahlenbündel zuführbar sind und die detektierten Teilstrahlenbündel in elektrische, phasenverschobene Abtastsignale umsetzen.

2.  Optische Positionsmesseinrichtung nach Anspruch 1, wobei die Abtastplatte (21; 121; 221; 321) ferner derart ausgebildet ist, dass mindestens zwei Teilstrahlenbündel zwischen der Abtastplatte (21; 121; 221; 321) und der Reflexions-Maßverkörperung (10; 110; 210; 310) symmetrisch in Bezug auf eine Abtastplatten-Normale propagieren und die Reflexions-Maßverkörperung (10; 110; 210; 310) unter deren Littrow-Winkel beaufschlagen.

3.  Optische Positionsmesseinrichtung nach Anspruch 2, wobei die Reflexions-Maßverkörperung (10; 110; 210; 310) in +/- 1. Beugungsordnung die maximalen Beugungseffizienzen aufweist,

4.  Optische Positionsmesseinrichtung nach Anspruch 1, wobei die Lichtleitfaser (30; 130; 230; 330) als Multimodefaser ausgebildet ist, über die sowohl das zur Beleuchtung genutzte Strahlenbündel hin zum Faseroptik-Abtastkopf (20; 120; 220; 320) als auch die wiedervereinigten Teilstrahlenbündel weg vom Faseroptik-Abtastkopf (20; 120; 220; 320) übertragbar sind.

**5.** Optische Positionsmesseinrichtung nach mindestens einem der vorhergehenden Ansprüche, wobei die Abtastplatte (21; 121) als plattenförmiges, transparentes Substrat ausgebildet ist, wobei

- auf der der Lichtleitfaser (30; 130) zugewandten Seite der Abtastplatte (21; 121) ein erstes Transmissions-Gitter angeordnet (23; 123) ist, welches das darauf einfallende Strahlenbündel in mindestens zwei gebeugte Teilstrahlenbündel aufspaltet, die asymmetrisch in Bezug auf eine Abtastplatten-Normale weiterpropagieren und
- auf der der Reflexions-Maßverkörperung (10; 110) zugewandten Seite der Abtastplatte (21; 121) ein zweites Transmissionsgitter (24; 124) angeordnet ist, das die vom ersten Transmissionsgitter (23; 123) her darauf einfallenden Teilstrahlenbündel derart ablenkt, dass diese symmetrisch zueinander in Bezug auf eine Abtastplatten-Normale zwischen der Abtastplatte (21; 121) und der Reflexions-Maßverkörperung (10; 110) propagieren und die Reflexions-Maßverkörperung (10; 110) unter deren Littrow-Winkel beaufschlagen.

**6.** Optische Positionsmesseinrichtung nach Anspruch 5, wobei das erste Transmissionsgitter (23; 123) und das zweite Transmissionsgitter (24; 124) jeweils als geblaztes Phasengitter ausgebildet sind.

**7.** Optische Positionsmesseinrichtung nach Anspruch 6, wobei das erste Transmissionsgitter (23; 123) und das zweite Transmissionsgitter (24; 124) entlang der Messrichtung (x) einen periodischen Phasenverlauf aufweisen.

**8.** Optische Positionsmesseinrichtung nach Anspruch 5, wobei das erste Transmissionsgitter (123) ferner derart ausgebildet ist, dass darüber eine kollimierende Wirkung auf das darauf einfallende Strahlenbündel resultiert.

**9.** Optische Positionsmesseinrichtung nach Anspruch 5, wobei zur Einstellung einer Mehrfachabtastung der zu den phasenverschobenen Abtastsignalen beitragenden Signalanteilen die Dicke ($d_{AP}$) der Abtastplatte (21; 121) und/oder die Gitterparameter der darauf angeordneten Transmissionsgitter (23, 24; 123, 124) geeignet gewählt ist.

**10.** Optische Positionsmesseinrichtung nach mindestens einem der Ansprüche 1 - 4, wobei ein linear polarisiertes Strahlenbündel auf die Abtastplatte (221; 321) einfällt, wobei

- an der der Lichtleitfaser (230; 330) zugewandten Seite der Abtastplatte (221; 321) ein erstes Transmissions-Gitter (223; 323) angeordnet ist, welches das darauf einfallende Strahlenbündel in mindestens zwei gebeugte Teilstrahlenbündel aufspaltet und eine kollimierende Wirkung auf das darauf einfallende Strahlenbündel ausübt und
- an der der Reflexions-Maßverkörperung (210; 310) zugewandten Seite der Abtastplatte (221; 321) ein doppelbrechendes Element (226; 326) angeordnet ist, in dem die aufgespaltenen Teilstrahlenbündel asymmetrisch in Bezug auf eine Abtastplatten-Normale weiterpropagieren und nach dem Verlassen der Abtastplatte (221; 321) symmetrisch zueinander in Bezug auf die Abtastplatten-Normale zwischen der Abtastplatte (221; 321) und der Reflexions-Maßverkörperung (210; 310) propagieren und die Reflexions-Maßverkörperung (210; 310) unter dem Littrow-Winkel beaufschlagen.

**11.** Optische Positionsmesseinrichtung nach Anspruch 10, wobei zur Einstellung einer Mehrfachabtastung der zu den phasenverschobenen Abtastsignalen beitragenden Signalanteilen die Dicke ($d_{dE}$) des doppelbrechenden Elements (226; 326) geeignet gewählt ist.

**12.** Optische Positionsmesseinrichtung nach Anspruch 1, wobei die Aufspaltmittel mehrere im Strahlengang hintereinander angeordnete Beugungsgitter umfassen.

**13.** Optische Positionsmesseinrichtung nach Anspruch 1, wobei am maßverkörperungs-abgewandten Ende der Lichtleitfaser eine Antireflexschicht angeordnet ist und/oder die Lichtleitfaser dort einen Schrägschliff aufweist.

## Claims

**1.** Optical position measuring device for producing a plurality of phase-shifted scanning signals with respect to the relative position of a fibre-optic scanning head (20; 120; 220; 320) and a reflection standard (10; 110; 210; 310) which is movable with respect thereto in at least one measuring direction, wherein a scanning plate (21; 121; 221; 321) is arranged in the fibre-optic scanning head (20; 120; 220; 320) in front of the standard-side end of an optical fibre (30; 130; 230; 330) and wavelength-dependent coding of the phase-shifted scanning signals is effected by way of producing the phase-shifted scanning signals from components of the illumination spectrum having different wavelengths, wherein the scanning plate (21; 121; 221; 321) is embodied such that

- a beam that is incident on the scanning plate (21; 121; 221; 321) is split into at least two partial beams, which impinge on the reflection standard (10; 110; 210; 310) and are subsequently recombined and interfere with one another to produce the phase-shifted scanning signals, and
- the partial beams travel different optical path lengths between the splitting and the recombination, wherein
- arranged at the end of the optical fibre (30; 130; 230; 330) that is remote from the standard are

- a spectrally broadband light source (40) or
- a plurality of light sources that emit radiation of different wavelengths,

the radiation of which is able to be coupled into the optical fibre (30; 130; 230; 330) as an illumination beam via an input coupling means and
- arranged at the end of the optical fibre (30; 130; 230; 330) that is remote from the standard is a detector device (50), which comprises

- splitting means (51) for the wavelength-dependent separation of the recombined partial beams and
- a plurality of optoelectronic detector elements, to which the separated partial beams may be guided and which convert the detected partial beams into electrical, phase-shifted scanning signals.

2. Optical position measuring device according to Claim 1, wherein the scanning plate (21; 121; 221; 321) is furthermore embodied such that at least two partial beams propagate symmetrically with respect to a scanning plate normal between the scanning plate (21; 121; 221; 321) and the reflection standard (10; 110; 210; 310) and impinge on the reflection standard (10; 110; 210; 310) at the Littrow angle thereof.

3. Optical position measuring device according to Claim 2, wherein the reflection standard (10; 110; 210; 310) has the maximum diffraction efficiencies in the +/- 1st order of diffraction.

4. Optical position measuring device according to Claim 1, wherein the optical fibre (30; 130; 230; 330) is embodied as a multimode fibre, which is utilizable both to transmit the beam used for illumination to the fibre-optic scanning head (20; 120; 220; 320) and to transmit the recombined partial beams away from the fibre-optic scanning head (20; 120; 220; 320).

5. Optical position measuring device according to at least one of the preceding claims, wherein the scanning plate (21; 121) is embodied as a plate-shaped, transparent substrate, wherein,

- on the side of the scanning plate (21; 121) that faces the optical fibre (30; 130), a first transmission grating is arranged (23; 123), which splits the beam that is incident thereon into at least two diffracted partial beams which continue to propagate asymmetrically with respect to a scanning plate normal, and
- on the side of the scanning plate (21; 121) that faces the reflection standard (10; 110), a second transmission grating (24; 124) is arranged, which deflects the partial beams that are incident on it from the first transmission grating (23; 123) such that they propagate symmetrically with respect to one another relative to a scanning plate normal between the scanning plate (21; 121) and the reflection standard (10; 110) and impinge on the reflection standard (10; 110) at the Littrow angle thereof.

6. Optical position measuring device according to Claim 5, wherein the first transmission grating (23; 123) and the second transmission grating (24; 124) are each embodied as a blazed phase grating.

7. Optical position measuring device according to Claim 6, wherein the first transmission grating (23; 123) and the second transmission grating (24; 124) have a periodic phase profile along the measuring direction (x) .

8. Optical position measuring device according to Claim 5, wherein the first transmission grating (123) is furthermore embodied such that it has a collimating effect on the beam that is incident thereon.

9. Optical position measuring device according to Claim 5, wherein, for setting multiple scanning of the signal portions that contribute to the phase-shifted scanning signals, the thickness ($d_{AP}$) of the scanning plate (21; 121) and/or the grating parameters of the transmission grating (23, 24; 123, 124) arranged thereon is/are appropriately chosen.

**10.** Optical position measuring device according to at least one of Claims 1-4, wherein a linearly polarized beam is incident on the scanning plate (221; 321), wherein,

- at the side of the scanning plate (221; 321) that faces the optical fibre (230; 330), a first transmission grating (223; 323) is arranged, which splits the beam that is incident thereon into at least two diffracted partial beams and has a collimating effect on the beam that is incident thereon, and
- at the side of the scanning plate (221; 321) that faces the reflection standard (210; 310), a birefringent element (226; 326) is arranged, in which the split partial beams continue to propagate asymmetrically with respect to a scanning plate normal and, after leaving the scanning plate (221; 321), propagate symmetrically with respect to one another relative to the scanning plate normal between the scanning plate (221; 321) and the reflection standard (210; 310) and impinge on the reflection standard (210; 310) at the Littrow angle.

**11.** Optical position measuring device according to Claim 10, wherein, for setting multiple scanning of the signal portions that contribute to the phase-shifted scanning signals, the thickness ($d_{dE}$) of the birefringent element (226; 326) is appropriately chosen.

**12.** Optical position measuring device according to Claim 1, wherein the splitting means comprise a plurality of diffraction gratings arranged in the beam path one behind the other.

**13.** Optical position measuring device according to Claim 1, wherein an anti-reflection layer is arranged at the end of the optical fibre that is remote from the standard and/or the optical fibre here has an angled polish.

**Revendications**

**1.** Dispositif de mesure optique de position destiné à générer une pluralité de signaux de balayage déphasés par rapport à la position relative d'une tête de balayage à fibre optique (20 ; 120 ; 220 ; 320) et d'un étalon de mesure de réflexion (10) ; 110 ; 210 ; 210 ; 310), dans lequel une plaque de balayage (21 ; 121 ; 221 ; 321 ; 321) est disposée dans la tête de balayage à fibre optique (20 ; 120 ; 220 ; 320) devant l'extrémité côté étalon de mesure d'une fibre optique (30 ; 130 ; 230 ; 330), et un codage en fonction de la longueur d'onde des signaux de balayage déphasés est effectué en générant les signaux de balayage déphasés à partir de composantes du spectre d'éclairement ayant des longueurs d'onde différentes, dans lequel la plaque de balayage (21 ; 121 ; 221 ; 221 ; 321) est conçue de manière à ce que

- un faisceau de rayons incident sur la plaque de balayage (21 ; 121 ; 221 ; 221 ; 321) soit soumis à une séparation en au moins deux faisceaux de rayons partiels qui sont incidents sur l'étalon de mesure de réflexion (10 ; 110 ; 210 ; 310) et interfèrent ensuite entre eux afin de générer les signaux de balayage déphasés recombinés, et
- les faisceaux de rayons partiels parcourent des longueurs de chemins optiques différentes entre la séparation et la recombinaison, dans lequel
- une source de lumière à large bande spectrale (40) ou
- plusieurs sources de lumière, qui émettent un rayonnement ayant des longueurs d'onde différentes
- sont disposées à l'extrémité de la fibre optique (30 ; 130 ; 230 ; 330) qui est tournée à l'opposé de l'étalon de mesure,
sources de lumière dont le rayonnement peut être injecté dans la fibre optique (30 ; 130 ; 230 ; 230 ; 330) par l'intermédiaire de moyens d'injection, en tant que faisceaux de rayons d'éclairement, et
- un dispositif détecteur (50) est disposé à l'extrémité de la fibre optique (30 ; 130 ; 230 ; 330) qui est tournée à l'opposé de l'étalon de mesure, lequel dispositif détecteur comprend
- des moyens de séparation (51) destinés à séparer en fonction de la longueur d'onde les faisceaux de rayons partiels recombinés, et
- une pluralité d'éléments détecteurs optoélectroniques auxquels les faisceaux de rayons partiels séparés peuvent être délivrés et qui convertissent les faisceaux de rayons partiels en des signaux de balayage électriques déphasés.

**2.** Dispositif de mesure optique de position selon la revendication 1, dans lequel
la plaque de balayage (21 ; 121 ; 221 ; 221 ; 321) est en outre réalisée de manière à ce qu'au moins deux faisceaux de rayons partiels se propagent symétriquement par rapport à une normale à la plaque de balayage entre la plaque de balayage (21 ; 121 ; 221 ; 321) et l'étalon de mesure de réflexion (10 ; 110 ; 210 ; 310) et soient incidents sur l'étalon de mesure de réflexion (10 ; 110 ; 210 ; 210 ; 310) sous son angle de Littrow.

3. Dispositif optique de mesure de position selon la revendication 2, dans lequel
l'étalon de mesure de réflexion (10 ; 110 ; 210 ; 310) présente les rendements de diffraction maximaux à l'ordre de diffraction +/- 1.

4. Dispositif de mesure optique de position selon la revendication 1, dans lequel
la fibre optique (30 ; 130 ; 230 ; 330) est réalisée sous la forme d'une fibre multimode, par l'intermédiaire de laquelle il est possible de transmettre non seulement le faisceau de rayons utilisé pour l'éclairage vers la tête de balayage à fibre optique (20 ; 120 ; 220 ; 320) mais également les faisceaux partiels recombinés à distance de la tête de balayage à fibre optique (20 ; 120 ; 220 ; 220 ; 320).

5. Dispositif de mesure optique de position selon au moins l'une des revendications précédentes, dans lequel
la plaque de balayage (21 ; 121) est réalisée sous la forme d'un substrat transparent en forme de plaque, dans lequel,

- sur le côté de la plaque de balayage (21 ; 121) qui est tourné vers la fibre optique (30 ; 130) est disposé un premier réseau de transmission (23 ; 123) qui sépare le faisceau incident en au moins deux faisceaux de rayons partiels diffractés qui se propagent de manière asymétrique par rapport à une normale à la plaque de balayage, et
- un deuxième réseau de transmission (24 ; 124) est disposé sur le côté de la plaque de balayage (21 ; 121) qui est tourné vers l'étalon de mesure de réflexion (10 ; 110), qui dévie les faisceaux de rayons partiels incidents sur celui-ci et provenant du premier réseau de transmission (23 ; 123) de manière qu'ils se propagent de manière symétrique l'un de l'autre par rapport à une normale à la plaque de balayage entre la plaque de balayage (21 ; 121) et l'étalon de mesure de réflexion (10 ; 110) et à ce qu'ils soient incidents sur l'étalon de mesure de réflexion (10 ; 110) sous leur angle de Littrow.

6. Dispositif de mesure optique de position selon la revendication 5, dans lequel
le premier réseau de transmission (23 ; 123) et
le second réseau de transmission (24 ; 124) sont respectivement réalisés sous la forme d'un réseau de phase blazé.

7. Dispositif de mesure optique de position selon la revendication 6, dans lequel
le premier réseau de transmission (23 ; 123) et
le second réseau de transmission (24 ; 124) présentent une courbe de phase périodique le long de la direction de mesure (x).

8. Dispositif optique de mesure de position selon la revendication 5, dans lequel
le premier réseau de transmission (123) est en outre réalisé de manière à obtenir un effet de collimation sur le faisceau incident sur celui-ci.

9. Dispositif de mesure optique de position selon la revendication 5, dans lequel
l'épaisseur ($d_{AP}$) de la plaque de balayage (21 ; 121) et/ou les paramètres de réseau des réseaux de transmission (23, 24 ; 123, 124) disposés sur celle-ci sont choisis de manière appropriée pour régler un balayage multiple des composantes de signal contribuant aux signaux de balayage déphasés.

10. Dispositif de mesure optique de position selon au moins l'une des revendications 1 à 4, dans lequel un faisceau de rayons polarisé linéairement est incident sur la plaque de balayage (221 ; 321), dans lequel

- un premier réseau de transmission (223 ; 323) est disposé sur le côté de la plaque de balayage (221 ; 321) qui est tourné vers la fibre optique (230 ; 330) et sépare le faisceau de rayons incident sur celui-ci en au moins deux faisceaux de rayons partiels diffractés et produit un effet de collimation sur le faisceau de rayons incident sur celui-ci, et
- un élément biréfringent (226 ; 326) est disposé sur le côté de la plaque de balayage (221 ; 321) qui est tourné vers l'étalon de mesure de réflexion (210 ; 310), dans lequel les faisceaux de rayons partiels séparés continuent de se propager de manière asymétrique par rapport à une normale à la plaque de balayage (221 ; 321) et, après avoir quitté cette dernière, se propagent symétriquement l'un de l'autre par rapport à la normale à la plaque de balayage, entre la plaque de balayage (221 ; 321) et l'étalon de mesure de réflexion (210 ; 310) et sont incidents sur l'étalon de mesure de réflexion (210 ; 310) sous l'angle de Littrow.

11. Dispositif de mesure optique de position selon la revendication 10, dans lequel

l'épaisseur ($d_{dE}$) de l'élément biréfringent (226 ; 326) est choisie de manière appropriée pour régler un balayage multiple des composantes de signal contribuant aux signaux de balayage déphasés.

12. Dispositif de mesure optique de position selon la revendication 1, dans lequel
les moyens de séparation comprennent une pluralité de réseaux de diffraction disposés les uns derrière les autres sur le chemin du faisceau.

13. Dispositif de mesure optique de position selon la revendication 1, dans lequel
une couche antireflet est disposée à l'extrémité de la fibre optique qui est tournée à l'opposé de l'étalon de mesure et/ou dans lequel la fibre optique présente à cet endroit une section oblique.

FIG.1

EP 2 765 394 B1

FIG.2a

0°    90°   180°  270°

TP$_{G1}$

23

Y
Z   X

FIG.2b

0°    90°   180°  270°

TP$_{G2}$

24

Y
Z   X

19

FIG.3

FIG.4

FIG.5

230
220
222
225
223
221

$TP_{G1}$

$d_{dE}$

226

$TP_{M}$

210

0A

Z
Y — X

FIG.6

0°   90°   180°   270°

$TP_{G1}$

223

Y
Z — X

FIG.7

FIG.8

0°   90°   180°   270°

323

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007024349 A1

- EP 1887324 A1